# EUROPÄISCHE PATENTSCHRIFT

(11) **EP 1 091 162 B1**
(45) Veröffentlichungstag und Bekanntmachung des Hinweises auf die Patenterteilung: **17.12.2003**
(21) Anmeldenummer: 00120437.9
(22) Anmeldetag: 19.09.2000
(51) Int. Cl.: F16N 39/06, B01D 35/027

(54) **Reinigungsmatte für Flüssigkeiten in Getrieben**
Cleaning mat for gear mechanism
Support de nettoyage pour boîte de vitesse

(30) Priorität: 06.10.1999 EP 99119792
(43) Veröffentlichungstag der Anmeldung: 11.04.2001
(73) Patentinhaber: Ford Global Technologies, Inc., A subsidiary of Ford Motor Company, Dearborn, Michigan 48126 (US)
(72) Erfinder: Odermatt, Manfred, 53773 Hennef (DE); Mohr, Christian, 54290 Trier (DE)
(74) Vertreter: Drömer, Hans-Carsten, Dipl.-Ing.

(56) Entgegenhaltungen:
- US-A- 3 480 149
- US-A- 3 497 065
- US-A- 3 784 011
- US-A- 4 136 011
- US-A- 4 312 753
- US-A- 4 352 737
- US-A- 4 387 023
- US-A- 4 790 938

## Beschreibung

Die Erfindung bezieht sich auf eine Reinigungseinrichtung für Flüssigkeiten, insbesondere in Getrieben, der im Oberbegriff des Patentanspruches 1 erläuterten Art und ein Verfahren zur Herstellung einer Reinigungseinrichtung.

Aus der DE 40 03 900 A1 ist ein Zahnrädergetriebe mit einem oberhalb des Ölspiegels angeordneten Ölauffangbehälter bekannt, der eine obere Eintrittsöffnung und einen Ablauf aufweist, zwischen denen ein Filter zum Aufnehmen und Festhalten von Verunreinigungen in einer durch umlaufende Maschinenelemente zirkulierenden Flüssigkeit angeordnet ist.

Diese bekannte Einrichtung weist den Nachteil auf, daß die durch die umlaufenden Zahnräder in Umlauf gebrachte Flüssigkeit; in diesem Fall das Schmieröl, nur zu einem geringen Teil diesen Ölauffangbehälter passiert und insbesondere dies nur im dynamischen Umlaufbetrieb.

Während der normalerweise größeren Zeitspannen eines Ruhezustandes setzen sich Verunreinigungen der Flüssigkeit am Boden des Gehäuses ab und werden beim nächsten Umlaufbetrieb wieder aufgewirbelt und mitgenommen, wodurch die Wahrscheinlichkeit und Gefahr, daß solche Verunreinigungen in Lager gelangen und dort zerstörend wirksam werden, wesentlich erhöht wird.

Aus der JP 59 062 797 A1 ist eine Einrichtung zum Aufnehmen und Festhalten von Verunreinigungen in Flüssigkeiten in einem umlaufende Maschinenelemente aufnehmenden Gehäuse bekannt, bei dem in einem kleinen Bereich des Bodens des Gehäuses unter Abschirmung durch ein Maschengewebe Verunreinigungen in ein unterhalb des Maschengewebes angeordnetes poröses Reinigungsmatte absinken können, wo sie festgehalten und einem weiteren Umlauf entzogen werden.

Die bekannte Einrichtung weist den gleichen Nachteil auf wie die zuvor erwähnte Einrichtung, nämlich daß die zum Aufnehmen und Festhalten von Verunreinigungen vorgesehene Fläche im Gehäuse viel zu gering bemessen ist, so daß ein Großteil der sich im Ruhezustand absetzenden Verunreinigungen wieder in Umlauf gelangen.

Aus der US 4790938 schließlich ist es bekannt, in einem Gehäuse, in dem Flüssigkeit zirkuliert, die Flüssigkeit mittels einer Filtermatte, die großflächig auf dem Gehäuseboden angeordnet ist, zu reinigen. Die Filtermatte besteht aus einem porösen und elastischen Material mit einer Vielzahl verschlungener Filterkanäle, wobei die Filterkanäle mit zunehmender Entfernung von der Oberfläche der Filtermatte zunehmend enger werden. Strömt die mit Partikeln verunreinigte Flüssigkeit über die Filtermatte, verformt sich die Filtermatte aufgrund ihrer Elastizität mit dem Flüssigkeitsstrom bis zu dem Punkt, an dem die Rückstellkraft größer als die Reibkraft aus der Anströmung der Flüssigkeit ist. Dann strömt ein geringer Teil der Flüssigkeit und darin enthaltene Verunreinigungen in die Filterkanäle ein. Aufgrund dieser Durchströmung der Filterkanäle, die sich mit jeder Änderung des Flüssigkeitsstromes auf der Oberfläche der Filtermatte einstellt, werden die Verunreinigungen immer tiefer in die Filterkanäle gespült und verfangen sich schließlich bzw. werden festgehalten in den sich verengenden Filterkanälen.

Nachteilig ist bei dieser Ausführung, daß die poröse Filtermatte nur durchströmt wird, wenn eine Änderung der Anströmung der Flüssigkeit erfolgt. Bei konstanten Anströmungsverhältnissen und bei Stillstand der Flüssigkeit ist die Filtermatte nicht in der Lage, Verunreinigungen aus der Flüssigkeit herauszufiltem.

Aus der US 3497065 ist ein Filter bekannt mit zwei aus harzgetränktem Nadelfilz bestehenden Filtermatten. Zwischen den beiden flüssigkeitsundurchlässigen Filtermatten sind Filterkanäle sowie Einlaß- und Auslaßöffnungen angeordnet. Die Filterwirkung wird erzielt, indem die zu filternde Flüssigkeit zwischen den beiden Filtermatten hindurchfließt. Der Filter ist sehr aufwendig ausgeführt, da er zumindest zwei Filtermatten, Leitungen für die Ein- und Auslaßöffnungen und ggf. einer Filterpumpe benötigt.

Die Aufgabe der Erfindung ist es, eine Reinigungseinrichtung, vor allem für Getriebe, derart zu verbessern, daß die Verunreinigungen aufnehmende und festhaltende Reinigungsmatte auf einer möglichst großen Bodenfläche des Gehäuses in einfacher Weise und mit einfachen Mitteln angeordnet werden kann, und daß die Reinigungsmatte im Betrieb und im Stillstand die Flüssigkeit reinigt.

Gemäß der Erfindung wird diese Aufgabe gelöst, indem die Reinigungseinrichtung die in den Patentansprüchen 1, 2 oder 15 aufgezeigten Merkmale aufweist.

Dadurch, daß die Reinigungsmatte eine faserige Zusammensetzung aufweist, wird die Flüssigkeit sowohl im Betrieb als auch im Stillstand gereinigt, wobei die Reinigungsmatte jeweils durch Filtration und durch Sedimentation Verunreinigungen aus der Flüssigkeit entfernt. Der einfache Aufbau der Reinigungsmatte aus Fasern erlaubt die Verwendung vorgefertigter Fasermatten, woraus die Reinigungsmatte durch Ausschneiden und Umformen beliebige Formen erhalten kann. Eine derartige Reinigungsmatte ist großflächig an den geeigneten Bereichen im Getriebegehäuse zu applizieren.

Während des Betriebes befindet sich die Flüssigkeit durch die Drehung der Getriebewellen und durch Trägheitskräfte ständig in Bewegung. Die an der Reinigungsmatte vorbeiströmende Flüssigkeit wird durch die lose Anordnung der Filterfasern in der Reinigungsmatte abgebremst. Die in der Reinigungsmatte befindliche Flüssigkeit weist mit zunehmendem Abstand von der Oberfläche des Filters eine immer geringere Fließgeschwindigkeit auf. Aufgrund der geringen Fließgeschwindigkeit verbleiben die in der Flüssigkeit befindlichen Verunreinigungen im Fasergewirr der Reinigungsmatte und sinken auf den Grund der Reinigungsmatte.

Zusätzlich sinken bei Stillstand auch Verunreinigungen, die sich in Flüssigkeiten über der Reinigungsmatte befinden, in die Reinigungsmatte ein. Wenn das Getriebe wieder in Betrieb genommen wird, werden die herabgesunkenen Verunreinigungen von den Fasern der Reinigungsmatte nicht freigegeben.

Strömt die Flüssigkeit über die Oberfläche der Reinigungsmatte, können sich die Fasern in Strömungsrichtung legen und versperren den Verunreinigungen den Weg zurück ins Getriebegehäuse. Gleichzeitig werden die Verunreinigungen durch die geringe, aber vorhandene Fließbewegung der Flüssigkeit in der Reinigungsmatte immer tiefer in die Reinigungsmatte gespült. Am Grund der Reinigungsmatte sind die Verunreinigungen schließlich gefangen, da dort die Fließgeschwindigkeit so gering ist, daß sie nicht wieder aus der Reinigungsmatte ausgespült werden können.

Ein weiterer Vorteil der Erfindung ist, daß ein Aufschäumen der Flüssigkeit, das durch schnelle Drehung der Getriebewellen entsteht, durch die Fasern der Reinigungsmatte unterbunden wird. Eine im Spritzbereich der Flüssigkeit angeordnete Reinigungsmatte absorbiert die spritzende Flüssigkeit und leitet die Flüssigkeit nicht-schäumend ab.

Als weiterer Vorteil der Erfindung ist zu sehen, daß durch die großflächige Auskleidung mit der Reinigungsmatte ein zusätzlicher Geräuschdämpfungseffekt erzielt wird.

Bei einer vorteilhaften Ausgestaltung besteht die Reinigungsmatte aus einer engmaschigen Bodenschicht und einer teppichartigen Oberschicht, wobei letztere in den verschiedensten bekannten Weisen durch Nadeln, Tuften oder Schlingen herstellbar ist. Eine derartige Reinigungsmatte kann auf einfache Weise durch Ausschneiden aus Meterware hergestellt werden. Durch Umformen kann sie an das Gehäuse angepaßt werden und weist nach dem Umformprozeß eine hohe Formbeständigkeit auf.

In einer weiteren Ausführung besteht die Reinigungsmatte aus einer engmaschigen Zwischenschicht und einer teppichartigen Ober- und Unterschicht, wobei letztere in den verschiedensten bekannten Weisen durch Nadeln, Tuften oder Schlingen herstellbar ist. Dadurch ist die Reinigungsmatte in der Lage, von beiden Seiten Verunreinigungen aufzunehmen. Diese Funktion ist hilfreich, wenn die Reinigungsmatte mit Abstand von der Gehäusewandung angebracht ist, wobei die Reinigungsmatte dabei sowohl senkrecht als auch waagerecht im Gehäuse angeordnet sein kann.

Als Werkstoff für die Fasern der Reinigungsmatte ist vorzugsweise eine Kunststofffaser wie Polyamid oder Polyester vorgesehen. Die engmaschige Bodenschicht ist dadurch-gebildet, daß auf die Reinigungsmatte einseitig eine Gummierung, die vorzugsweise aus Styrol-Butadien-Gummi oder Acryl-Gummi besteht, aufgetragen ist. Prinzipiell sind alle Werkstoffe geeignet, die ausreichend beständig gegen Temperatur und Schmiermittel sind

Weist die Reinigungsmatte an der Oberfläche eine geringe Dichte und an der Unterseite eine hohe Dichte auf, so wird die Fähigkeit der Reinigungsmatte, Verunreinigungen festzuhalten, weiter erhöht. Die Verunreinigungen fangen sich an der Oberfläche, wo die Fasern locker angeordnet sind und werden dann in Richtung der Unterseite gespült, wo die Faser dichter gepackt sind, wodurch aber die Verunreinigungen besser von der Reinigungsmatte festgehalten werden.

Die Reinigungsmatte kann am Gehäuse durch Kleben befestigt sein. Dabei kann sie direkt mit den Fasern oder mit ihrer Bodenschicht am Gehäuse durch Kleben befestigt sein. Eine Verklebung von Fasern kann auch auf eine solche Weise erfolgen, daß auf eine Klebstoffschicht im Gehäuse eine Faserschicht durch Aufflocken oder Ähnliches aufgebracht wird. Die faserige Reinigungsmatte entsteht dann erst im Gehäuse selbst.

Eine andere mögliche Befestigungsart ist es, die Reinigungsmatte durch Klemmoder Schraubverbindungen am Gehäuse anzubringen. Dies ist vor allem in Hinblick auf die Austauschbarkeit der Reinigungsmatte nach einer bestimmten Betriebsdauer erforderlich. Durch die Schraub- und Klemmverbindungen ist die Reinigungsmatte während eines Wartungsvorganges vom Gehäuse lösbar und kann gegen eine neue Reinigungsmatte ausgetauscht werden.

Eine vorteilhafte Ausführung der Reinigungsmatte sieht vor, daß zur Aufrechterhaltung der Wärmeabgabekapazität des Gehäuses Abstandshalter vergesehen sind, auf denen die Reinigungsmatte angeordnet ist. Dadurch ist die Reinigungsmatte durch- und hinterströmbar zum Gehäuse angeordnet und die Wärme aus der Flüssigkeit kann direkt ans Gehäuse abgegeben werden.

Bei einer weiteren Ausführung ist die Reinigungsmatte wellenförmig ausgebildet, wobei die Wellentäler fest mit dem Getriebegehäuse verbunden sind und die Wellenberge Flüssigkeitskanäle unter der Reinigungsmatte hindurch bilden. Damit wird ebenfalls erreicht, daß die Reinigungsmatte hinterströmbar ist. Dies erhöht die Wärmeabgabe aus der Flüssigkeit über das Gehäuse auf der Unterseite der Reinigungsmatte; zusätzlich wird die effektive Fläche der Reinigungsmatte durch die in den Flüssigkeitskanälen vorhandenen Flächen der Unterseite der Reinigungsmatte erhöht.

In einer weiteren Ausführung sind die Ränder der Reinigungsmatte zumindest teilweise in einer flachen Keilform vom Getriebegehäuse abstehend angeordnet. Im flachen Flüssigkeitskeil, der sich unter diesen Rändern bildet, werden große Partikel, die nicht von den Fasern festgehalten werden, besonders gut zurückgehalten und somit dem Flüssigkeitsstrom entzogen.

Vorteilhaft ist die Reinigungsmatte teilweise oder ganz in dem sich an die unmittelbar ebene Bodenfläche anschließenden Bereich des Gehäuses in einem Bereich angeordnet, der im Umlaufbetrieb der Flüssigkeit einer direkten Beaufschlagung ausgesetzt ist. Damit wird vor allem die Schaumbildung der Flüssigkeit verhindert bei gleichzeitiger Reinigung derselben.

Eine weitere vorteilhafte Ausgestaltung sieht vor, daß die Reinigungsmatte bei der Anordnung im Getriebegehäuse zumindest eine Tasche bildet, die zumindest eine Öffnung zum Getriebeinnenraum aufweist, so daß bei Bewegung der Flüssigkeit ein Teil der Flüssigkeit in diese Tasche gelangt. Eine solche Tasche ist an einem Gehäusebereich angeordnet, indem die Reinigungsmatte eine Ausbuchtung aufweist, die an der höchsten Stelle eine Öffnung aufweist, während die Ränder der Ausbuchtung am Gehäuse anliegen. Auf diese Weise wird die Flüssigkeit, die in diese Tasche gelangt, sowohl durch Filtration als auch durch Sedimentation gereinigt.

Vorteilhaft weist eine Reinigungsmatte mit Taschen eine flüssigkeitsundurchlässige Schicht auf. Verunreinigungen, die sich in der in die Tasche eingebrachten Flüssigkeit befinden, verfangen sich in den Fasern der Reinigungsmatte in der Tasche. Beim nächsten Flüssigkeitsaustausch durch die Öffnung in der Tasche, bedingt durch Gehäusebewegung oder Spritzbeaufschlagung mit Flüssigkeit, gelangt die so gereinigte Flüssigkeit zurück ins Gehäuse, während die neu in die Tasche kommende, verunreinigte Flüssigkeit ebenfalls in der Tasche gereinigt wird.

Weitere vorteilhafte Ausführungen sehen vor, der Reinigungsmatte zusätzlich magnetischen Eigenschaften zu geben, um das Haltevermögen der Fasern in der Reinigungsmatte von metallischen, magnetisierbaren Partikeln der Verunreinigungen weiter zu erhöhen. Dazu kann die Reinigungsmatte magnetische Fasern aufweisen, d. h. die Reinigungsmatte kann zum Teil oder ganz aus magnetischen Fasern bestehen. Der gleiche Effekt wird erreicht, wenn in den Fasern der Reinigungsmatte magnetische Partikel enthalten sind.

Eine weitere Ausführungsform ist, an der Unterseite der Reinigungsmatte, die zum Gehäuse hin gerichtet ist, eine magnetische Schicht anzuordnen. Diese kann in bekannter Weise aus einer Magnetfolie bestehen, die direkt mit den Fasern der Reinigungsmatte verbunden ist. Dabei kann die Magnetfolie als Bestandteil der Reinigungsmatte sowohl einseitig an der Unterseite als auch in der Mitte der Reinigungsmatte angeordnet sein. Die Fasern umschließen die Magnetfolie dann völlig.

In den weiteren Patentansprüchen sind weitere zweckmäßige Anordnungen der faserigen Reinigungsmatte im Bezug zur Oberfläche des Gehäuses aufgezeigt.

Die Erfindung wird anhand in den beiliegenden Zeichnungen gezeigter Ausführungsbeispiele näher erläutert. Es zeigen
- Fig. 1: einen schematischen Vertikalschnitt durch ein Wechselgetriebe eines Kraftfahrzeuges mit der erfindungsgemäßen Reinigungsmatte;
- Fig. 2: eine Schnittansicht entlang der Linie II-II in Fig. 1;
- Fig. 3: eine schematische Ansicht der Bodenfläche des Wechselgetriebes in Richtung des Pfeils III in Fig. 1;
- Fig. 4, 5 und 6: entsprechende Schnitte bzw. Ansichten einer Reinigungsmatte, die mit Abstand von der Gehäusewandung angeordnet ist;
- Fig. 7: einen vertikalen Ausschnitt aus einem Wechselgetriebe mit einer Reinigungsmatte, die keilförmig abstehende Ränder aufweist;
- Fig. 8: einen vertikalen Ausschnitt aus einem Wechselgetriebe mit einer wellenförmig angeordneten Reinigungsmatte; und
- Fig.9: einen Querschnitt durch ein Wechselgetriebe mit Reinigungsmatten, die Taschen zur Flüssigkeitsreinigung aufweisen.

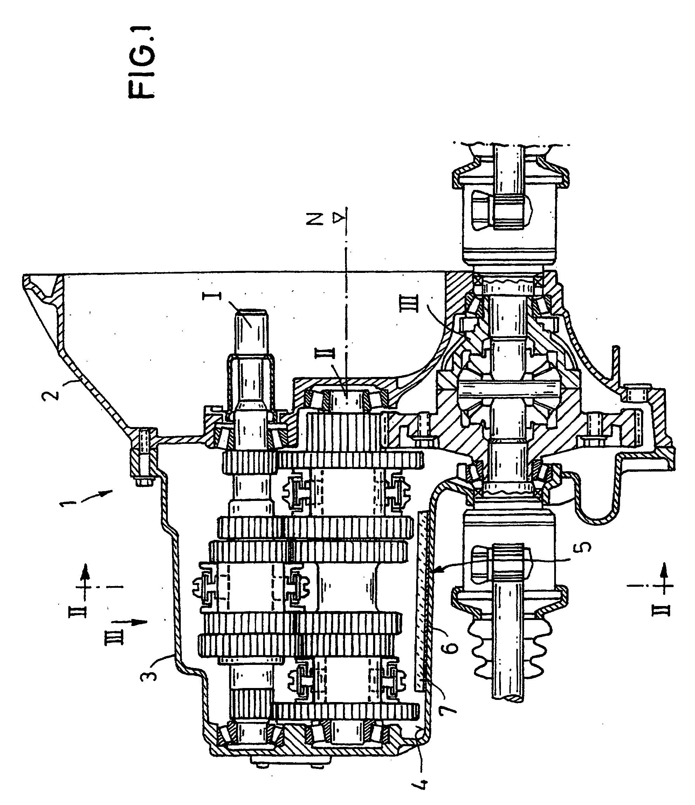

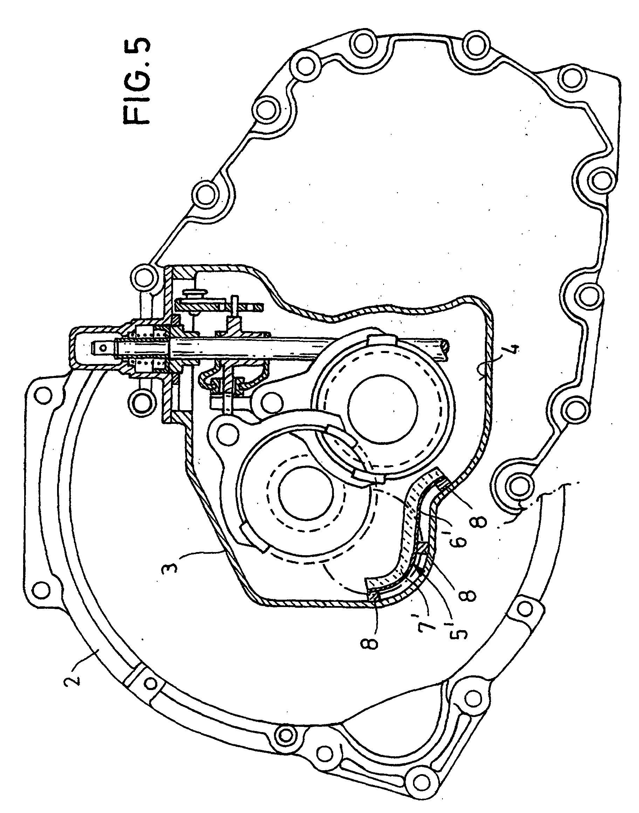

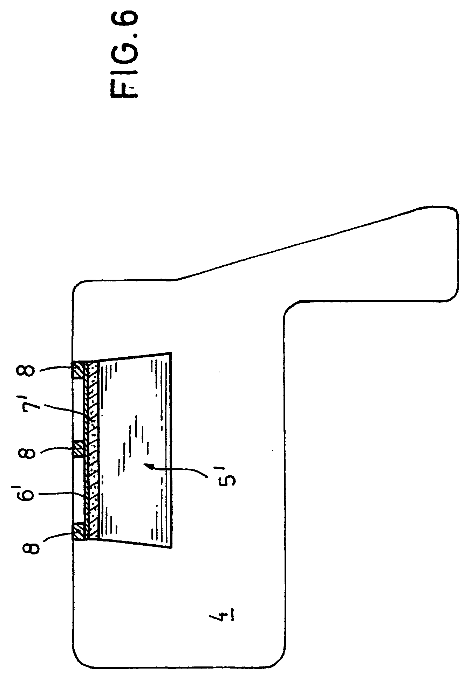

In den Figuren 1 bis 9 sind übereinstimmende Bauteile mit den gleichen Bezugszeichen versehen.

Ein Gehäuse 1 besteht im vorliegenden Fall aus einem Kupplungsgehäuse 2 und einem Getriebegehäuse 3, die in bekannter Weise Getriebewellen I, II und III in entsprechenden Wälzlagern gelagert aufnehmen.

Der Hohlraum des Gehäuses 1 ist in bekannter Weise mit einem Schmiermittel bis zu einem Normalstand gefüllt, der durch eine Strich-Punkt-Linie N angedeutet ist.

Auf dem im wesentlichen horizontalen Bodenbereich 4 des Getriebegehäuses 3 ist eine faserige Reinigungsmatte 5 angeordnet, die aus einer engmaschigen oder engzelligen Bodenschicht 6 und einer teppichartigen Oberschicht 7 besteht.

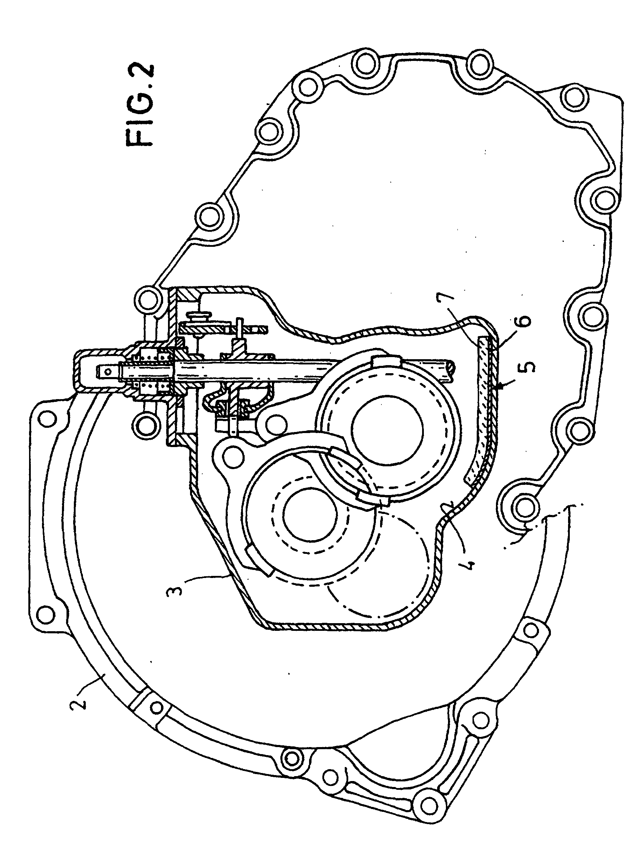

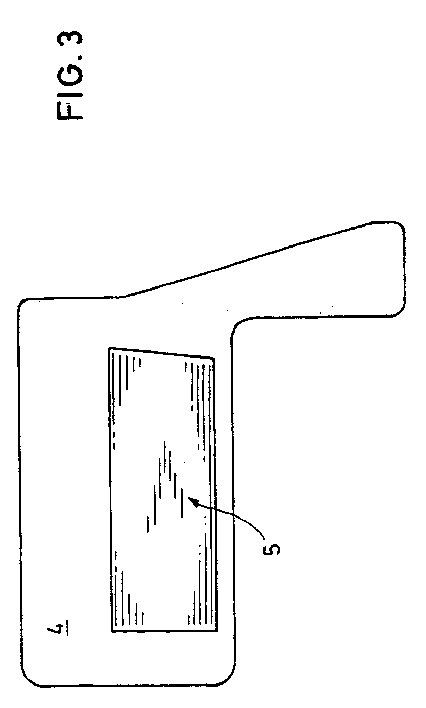

Wie aus einer Zusammenschau der Figuren 2 und 3 ersichtlich wird, erstreckt sich hierbei die faserige Reinigungsmatte 5 über einen erheblichen Bereich der horizontalen Bodenfläche 4 des Getriebegehäuses 3, wodurch insbesondere für den zumeist über eine größere Zeitspanne wirksamen Absetzprozess während eines Ruhezustandes eine sehr große Aufnahmefläche zum Aufnehmen und Festhalten der sich absetzenden Verunreinigungen zur Verfügung gestellt wird.

Die Anordnung der faserigen Reinigungsmatte 5 kann mit den verschiedensten technischen Verfahren erfolgen, insbesondere sind hierbei die Möglichkeiten gegeben, das Reinigungsmatte durch einen entsprechenden Kleber zu verankern, weiterhin besteht die Möglichkeit, das Reinigungsmatte durch entsprechende Klemm- oder Haltezungen oder sonstige Befestigungsvorrichtungen in seiner entsprechenden Lage im Getriebegehäuse 3 festzulegen.

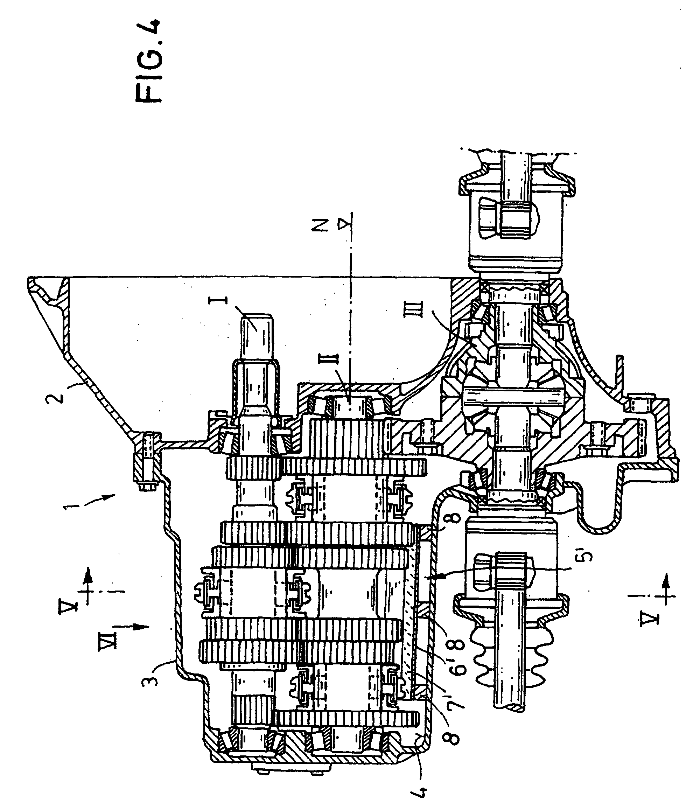

Um bei im Großserieneinsatz verwendeten Wechselgetrieben, insbesondere in Kraftfahrzeugen, die im Umlaufbetrieb einen erheblichen Wärmeabfuhrbedarf haben, die Wärmeabfuhr zu verbessern, wird auf die Ausführungsform gemäß der Figuren 4, 5 und 6 verwiesen. Eine faserige Reinigungsmatte 5', bestehend aus einer engmaschigen oder engzelligen Bodenschicht 6' und einer teppichartigen Oberschicht 7', ist an der im wesentlichen horizontalen Bodenfläche 4 des Getriebegehäuses 3 angeordnet. Die Bodenschicht 6' ist hierbei mit an entsprechenden Punkten angeordneten Abstandshaltem 8 versehen, mit der die faserige Reinigungsmatte 5' in einen derartigen Abstand zur Gehäusewand 4 gehalten werden kann, daß eine Hinterströmung stattfinden kann, wodurch die gegebene Kühlkapazität des Getriebegehäuses aufrechterhalten bleibt.

Die Art der Befestigung der faserigen Reinigungsmatte 5' kann wieder durch punktweises Verkleben an den entsprechenden Abstandshaltern 8 erfolgen, andererseits können diese Abstandshalter auch mit entsprechenden Klemmoder Halteeinrichtungen im Getriebegehäuse zusammenwirken. Dem Fachmann sind hierbei in der Art der Befestigung keinerlei Grenzen gesetzt, sofern nur sichergestellt wird, daß die Reinigungsmatte während des Umlaufgetriebes der Flüssigkeit stabil an ihrem Ort verbleibt.

Die Reinigungsmatte 5 bzw. 5' kann im wesentlichen aus sämtlichen faserigen Materialien bestehen, die dem Fachmann geläufig sind, um Verunreinigungen aus Flüssigkeiten aufzunehmen und festzuhalten, insbesondere können dies die üblichen synthetischen Fasermaterialien sein, die den entsprechenden Beanspruchungen durch heißes Schmiermittel und dergleichen gerecht werden können. Wesentlich gemäß der vorliegenden Erfindung ist jedoch, daß die Reinigungsmatte 5 bzw. 5' aus einer unmittelbar der Beaufschlagung durch die Flüssigkeit ausgesetzten teppichartigen Oberschicht 7 bzw. 7' und einer diese tragenden, engmaschigen oder engzelligen Bodenschicht 6 bzw. 6' besteht. Damit wird sichergestellt, daß ohne die bei herkömmlichen Filterpackungen erforderliche äußere Umhüllung das durch ein Fasergewirr gebildete Innere des faserigen Reinigungsmatte 5 bzw. 5' unmittelbar zugänglich ist und ggf. sogar gemäss der Ausführungsform in den Figuren 4 bis 6 durchströmbar sein kann.

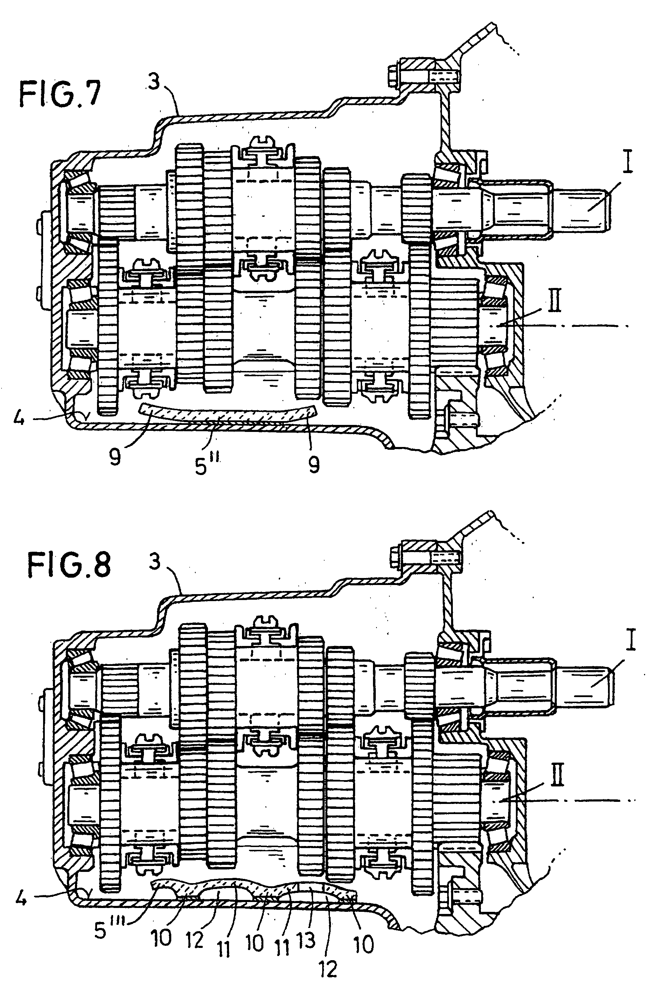

In Figur 7 ist eine Reinigungsmatte 5" mit keilförmig abstehenden Rändern 9 gezeigt. Die Reinigungsmatte 5" ist größflächig auf der Bodenfläche 4 befestigt.

Die Ränder 9 der Reinigungsmatte 5" weisen im flachen Winkel weg von der Bodenfläche 4 und bilden so die keilförmig abstehenden Ränder 9. Größere Partikel aus den Verunreinigungen in der Flüssigkeit werden unter diese Ränder 9 gespült und verfangen sich durch die Keilform unter den Rändern 9. Auch Partikel, die größer sind als der mittlere Faserabstand der Reinigungsmatte 5" können somit von der Reinigungsmatte aus der Flüssigkeit dauerhaft entfernt werden, da die Fasern die im Keil gefangenen Partikel entgültig festhalten.

Die in Figur 8 gezeigte Reinigungsmatte 5''' weist eine Wellenform auf. An den Wellentälem 10 ist sie mit der Bodenfläche 4 verbunden. Die Wellenberge 11 bilden zwischen Reinigungsmatte 5''' und Bodenfläche 4 die Flüssigkeitskanäle 12, durch die die Reinigungsmatte 5''' mit der Flüssigkeit hinterströmbar ist und damit die Wärmeabfuhr aus der Flüssigkeit über die Bodenfläche 4 erhöht wird. Zur besseren Durchströmung der Flüssigkeitskanäle sind zusätzliche Öffnungen 13 an den Wellenbergen 11 eingebracht.

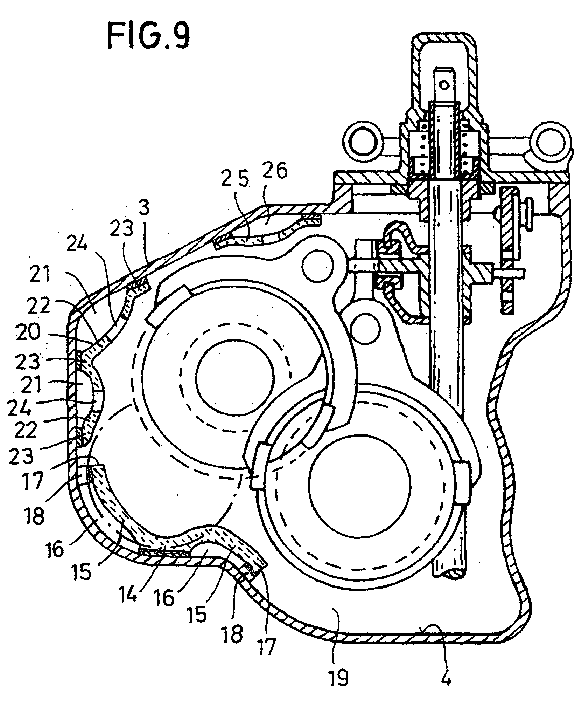

In Figur 9 sind verschiedene Anordnungen von Reinigungsmatten mit Taschen gezeigt. Reinigungsmatte 14 weist dazu zwei Ausbuchtungen 15 auf, die mit dem Gehäuse 3 die Taschen 16 bilden. Aufgrund der Stützung der Ränder 17 mit den Abstandshaltern 18 sind die Taschen 16 zum Gehäuseinnenraum 19 hin offen, wobei je nach Einbaulage des Wechselgetriebes auf jeden Fall eine Tasche die Öffnung nach oben hat. Die Flüssigkeit, die sich in der Tasche mit der Öffnung nach oben fängt, kann nicht aus der Tasche abfließen. Verunreinigungen in dieser Flüssigkeit fangen sich in den Fasern der Reinigungsmatte 14. Sobald neue, verunreinigte Flüssigkeit in die Tasche kommt, wird die alte, gereinigte Flüssigkeit wieder der Flüssigkeit im Gehäuseinnenraum 19 zugeführt.

Auf die gleiche Weise wirkt die Reinigungsmatte 20, bei der die Taschen 21 durch Ausbuchtungen 22 gebildet werden. An den Rändern 23 der Ausbuchtungen 22 ist die Reinigungsmatte 20 fest mit dem Gehäuse verbunden.

Über die Öffnungen 24, die direkt in die Reinigungsmatte 20 eingebracht sind, erfolgt der Flüssigkeitsaustausch in der bereits oben beschriebenen Form.

Auf die gleiche Weise kann die Reinigungsmatte 25 auch in einer Lage angebracht sein, die nur von Spritzflüssigkeit beaufschlagt wird. Durch die Fähigkeit der Tasche 26, Flüssigkeit kurzfristig zu speichern, ist auch an solchen Lagen der Reinigungseffekt der Reinigungsmatte 25 gewährleistet.

Die Erfindung zeigt somit eine Einrichtung zum Aufnehmen und Festhalten von Verunreinigungen in Flüssigkeiten in einem umlaufende Maschinenelemente aufnehmenden Gehäuse auf, die bei geringem Materialaufwand und äußerst geringem Montageaufwand in fast alle gängige Gehäuse dieser Art vorsorglich und/oder nachträglich einbringbar ist, um dort die Qualität der umlaufenden Flüssigkeit dadurch zu erhöhen, daß insbesondere während der langen Zeitspannen von Ruhezuständen feinste Verunreinigungen auch nicht metallischer Art lediglich durch deren Absinkverhalten aufgenommen und festgehalten werden.

## Patentansprüche

1. Reinigungseinrichtung für Flüssigkeiten, vor allem in Getrieben, wobei eine Reinigungsmatte (5, 5', 5", 5''', 14, 20, 25) auf einer einer unmittelbaren Beaufschlagung durch die Flüssigkeit ausgesetzten Fläche (4) des Gehäuses (3) des Getriebes, welches umlaufende Getriebeelemente aufnimmt, angeordnet ist,
**dadurch gekennzeichnet, daß**
die Reinigungsmatte (5, 5', 5", 5"', 14, 20, 25) eine vorwiegend faserige Beschaffenheit aufweist und die Reinigungsmatte (5) aus einer engmaschigen Bodenschicht (6) und einer teppichartigen Oberschicht (7) besteht, wobei letztere in den verschiedensten bekannten Weisen durch Nadeln, Tuften oder Schlingen herstellbar ist.

2. Reinigungseinrichtung gemäß dem Oberbegriff des Anspruches 1,
**dadurch gekennzeichnet, daß**
die Reinigungsmatte (5, 5', 5", 5"', 14, 20, 25) eine vorwiegend faserige Beschaffenheit aufweist und die Reinigungsmatte (5) aus einer engmaschigen Zwischenschicht und einer teppichartigen Ober- und Unterschicht besteht, wobei letztere in den verschiedensten bekannten Weisen durch Nadeln, Tuften oder Schlingen herstellbar ist.

3. Reinigungseinrichtung nach Anspruch 1 oder 2,
**dadurch gekennzeichnet, daß**
die Reinigungsmatte (5) aus einer Kunststoffaser, vorzugsweise Polyamid oder Polyester, besteht.

4. Reinigungseinrichtung nach den Ansprüchen 1,
**dadurch gekennzeichnet, daß**
die engmaschige Bodenschicht (6) dadurch gebildet ist, daß auf der Reinigungsmatte (5) einseitig eine Gummierung, die vorzugsweise aus Styrol-Butadien-Gummi oder Acryl-Gummi besteht, aufgetragen ist.

5. Reinigungseinrichtung nach Anspruch 1,
**dadurch gekennzeichnet, daß**
die Reinigungsmatte (5) an der Oberfläche eine geringe Dichte und an der Unterseite eine hohe Dichte aufweist.

6. Reinigungseinrichtung nach Anspruch 1 oder 2,
**dadurch gekennzeichnet, daß**
die Reinigungsmatte (5) am Gehäuse (3) durch Kleben befestigt ist.

7. Reinigungseinrichtung nach Anspruch 1,
**dadurch gekennzeichnet, daß**
die Reinigungsmatte (5) mit ihrer Bodenschicht (6) am Gehäuse (3) durch Kleben befestigt ist.

8. Reinigungseinrichtung nach Anspruch 1 oder 2,
**dadurch gekennzeichnet, daß**
die Reinigungsmatte (5) durch Klemm- oder Schraubverbindungen am Gehäuse (3) befestigt ist.

9. Reinigungseinrichtung nach Anspruch 1 oder 2,
**dadurch gekennzeichnet, daß**
die Reinigungsmatte (5') zur Aufrechterhaltung der Wärmeabgabekapazität des Gehäuses (3) mit Abstandshaltern (8) versehen ist, über die sie im Abstand zum Gehäuse (3) durch- und hinterströmbar angeordnet ist.

10. Reinigungseinrichtung nach Anspruch 1 oder 2,
**dadurch gekennzeichnet, daß**
die Ränder (9) der Reinigungsmatte (5") zumindest teilweise in einer flachen Keilform vom Gehäuse (3) abstehen.

11. Reinigungseinrichtung nach Anspruch 1 oder 2,
**dadurch gekennzeichnet, daß**
die Reinigungsmatte (5''') wellenförmig ausgebildet ist, wobei die Wellentäler (10) fest mit dem Gehäuse (3) verbunden sind und die Wellenberge (11) Flüssigkeitskanäle (12) unter der Reinigungsmatte (5''') hindurch bilden.

12. Reinigungseinrichtung nach einem der vorherigen Ansprüche,
**dadurch gekennzeichnet, daß**
die Reinigungsmatte (14) in dem sich an die unmittelbar ebene Bodenfläche (4) anschließenden Bereich des Gehäuses (3) in einem Bereich angeordnet ist, der im Umlaufbetrieb der Flüssigkeit einer direkten Beaufschlagung ausgesetzt ist.

13. Reinigungseinrichtung nach Anspruch 1 oder 2,
**dadurch gekennzeichnet, daß**
die Reinigungsmatte (14, 20, 25) bei der Anordnung im Getriebegehäuse zumindest eine Tasche (17, 21, 26) bildet, die zumindest eine Öffnung zum Gehäuseinnenraum (19) aufweist, so daß bei Bewegung der Flüssigkeit ein Teil der Flüssigkeit in diese Tasche (17, 21, 26) gelangt.

14. Reinigungseinrichtung nach Anspruch 1 oder 2,
**dadurch gekennzeichnet, daß**
die Reinigungsmatte (20, 25) eine flüssigkeitsundurchlässige Schicht aufweist.

15. Reinigungseinrichtung gemäß dem Oberbegriff des Anspruches 1,
**dadurch gekennzeichnet, daß**
die Reinigungsmatte (5) eine vorwiegend faserige Beschaffenheit aufweist und am Gehäuse (3) durch Kleben befestigt ist.

16. Reinigungseinrichtung nach einem der vorherigen Ansprüche,
**dadurch gekennzeichnet, daß**
die Reinigungsmatte magnetische Fasern aufweist.

17. Reinigungseinrichtung nach einem der Ansprüche 1 bis 15,
**dadurch gekennzeichnet, daß**
die Reinigungsmatte magnetische Partikel aufweist.

18. Reinigungseinrichtung nach einem der Ansprüche 1 bis 14,
**dadurch gekennzeichnet, daß**
an der Unterseite der Reinigungsmatte, die zum Gehäuse (3) hin gerichtet ist, eine magnetische Schicht angeordnet ist.

19. Verfahren zur Herstellung einer Reinigungseinrichtung nach Anspruch 15,
**dadurch gekennzeichnet, daß**
eine Faserschicht auf eine Klebstoffschicht im Gehäuse (3) aufgebracht wird.

## Claims

1. Cleaning device for liquids, especially in gearboxes, a cleaning mat (5, 5', 5", 5''', 14, 20, 25) being arranged on a surface (4), which is directly acted upon by the liquid, of the housing (3) of the gearbox that accommodates revolving gearbox elements, **characterized in that** the cleaning mat (5, 5', 5", 5''', 14, 20, 25) has a predominantly fibrous structure, and the cleaning mat (5) consists of a close-meshed bottom layer (6) and a carpet-like upper layer (7), it being possible for the latter to be produced in a wide variety of known ways by needling, tufting or looping.

2. Cleaning device according to the precharacterizing clause of Claim 1, **characterized in that** the cleaning mat (5, 5', 5", 5''', 14, 20, 25) has a predominantly fibrous structure, and the cleaning mat (5) consists of a close-meshed intermediate layer and a carpet-like upper and lower layer, it being possible for the latter to be produced in a wide variety of known ways by needling, tufting or looping.

3. Cleaning device according to Claim 1 or 2, **characterized in that** the cleaning mat (5) consists of a synthetic fibre, preferably polyamide or polyester.

4. Cleaning device according to Claim 1, **characterized in that** the close-meshed bottom layer (6) is formed by a rubber coating, which preferably consists of styrene-butadiene rubber or acrylic rubber, being applied to one side of the cleaning mat (5).

5. Cleaning device according to Claim 1, **characterized in that** the cleaning mat (5) has a low density on the surface and a high density on the lower side.

6. Cleaning device according to Claim 1 or 2, **characterized in that** the cleaning mat (5) is fastened to the housing (3) by bonding.

7. Cleaning device according to Claim 1, **characterized in that** the cleaning mat (5) is fastened by its bottom layer (6) to the housing (3) by bonding.

8. Cleaning device according to Claim 1 or 2, **characterized in that** the cleaning mat (5) is fastened to the housing (3) by clamping connections or screw connections.

9. Cleaning device according to Claim 1 or 2, **characterized in that**, in order to maintain the heat-dispensing capacity of the housing (3), the cleaning mat (5') is provided with spacers (8) via which it is arranged at a distance from the housing (3) in a manner such that flow can pass through it and behind it.

10. Cleaning device according to Claim 1 or 2, **characterized in that** the edges (9) of the cleaning mat (5") protrude at least partially from the housing (3) in a flat wedge shape.

11. Cleaning device according to Claim 1 or 2, **characterized in that** the cleaning mat (5''') is of wavy design, the wave troughs (10) being connected fixedly to the housing (3) and the wave crests (11) forming liquid ducts (12) under the cleaning mat (55''').

12. Cleaning device according to one of the preceding claims, **characterized in that** the cleaning mat (14), **in that** region of the housing (3) which adjoins the immediately planar bottom surface (4), is arranged in a region which is acted upon directly when the liquid is circulating.

13. Cleaning device according to Claim 1 or 2, **characterized in that** the cleaning mat (14, 20, 25), when arranged in the gearbox housing, forms at least one pocket (17, 21, 26) which has at least one opening to the housing interior (19), so that some of the liquid passes into this pocket (17, 21, 26) during movement of the liquid.

14. Cleaning device according to Claim 1 or 2, **characterized in that** the cleaning mat (20, 25) has a liquid-impermeable layer.

15. Cleaning device according to the precharacterizing clause of Claim 1, **characterized in that** the cleaning mat (5) has a predominantly fibrous structure and is fastened to the housing (3) by bonding.

16. Cleaning device according to one of the preceding claims, **characterized in that** the cleaning mat has magnetic fibres.

17. Cleaning device according to one of Claims 1 to 15, **characterized in that** the cleaning mat has magnetic particles.

18. Cleaning device according to one of Claims 1 to 14, **characterized in that** a magnetic layer is arranged on the lower side of the cleaning mat, which side is directed towards the housing (3).

19. Method for producing a cleaning device according to Claim 15, **characterized in that** a layer of fibres is fitted onto an adhesive layer in the housing (3).

## Revendications

1. Dispositif de nettoyage pour liquides, avant tout dans des boîtes de vitesses, dans lequel un tapis de nettoyage (5, 5', 5'', 5''', 14, 20, 25) est disposé sur une surface (4), soumise à une sollicitation directe par le liquide, du carter (3) de la boîte de vitesses qui reçoit des éléments tournants de la boîte de vitesses,
**caractérisé en ce que**
le tapis de nettoyage (5, 5', 5'', 5''', 14, 20, 25) présente une constitution essentiellement fibreuse et le tapis de nettoyage (5) se compose d'une couche de fond (6) à mailles étroites et d'une couche supérieure (7) de type tapis, cette dernière pouvant être fabriquée des manières les plus diverses connues par aiguilletage, tufting ou bouclage.

2. Dispositif de nettoyage selon le préambule de la revendication 1,
**caractérisé en ce que**
le tapis de nettoyage (5, 5', 5'', 5''', 14, 20, 25) présente une constitution essentiellement fibreuse et le tapis de nettoyage (5) se compose d'une couche intermédiaire à mailles étroites et d'une couche supérieure et d'une couche inférieure de type tapis, cette dernière pouvant être fabriquée des manières les plus diverses par aiguilletage, tufting ou bouclage.

3. Dispositif de nettoyage selon la revendication 1 ou 2,
**caractérisé en ce que**
le tapis de nettoyage (5) se compose d'une fibre synthétique, de préférence de polyamide ou de polyester.

4. Dispositif de nettoyage selon la revendication 1,
**caractérisé en ce que**
la couche de fond (6) à mailles étroites est formée en appliquant sur le tapis de nettoyage (5), d'un côté un enduit caoutchouteux qui se compose de préférence de caoutchouc styrène-butadiène ou de caoutchouc acrylique.

5. Dispositif de nettoyage selon la revendication 1,
**caractérisé en ce que**
le tapis de nettoyage (5) présente, sur la surface, une faible densité et une grande densité au niveau du côté inférieur.

6. Dispositif de nettoyage selon la revendication 1 ou 2,
**caractérisé en ce que**
le tapis de nettoyage (5) est fixé sur le carter (3) par collage.

7. Dispositif de nettoyage selon la revendication 1,
**caractérisé en ce que**
le tapis de nettoyage (5) est fixé avec sa couche de fond (6) sur le carter (3) par collage.

8. Dispositif de nettoyage selon la revendication 1 ou 2,
**caractérisé en ce que**
le tapis de nettoyage (5) est fixé sur le carter (3) par des assemblages par serrage ou par vissage.

9. Dispositif de nettoyage selon la revendication 1 ou 2,
**caractérisé en ce que**
le tapis de nettoyage (5') est pourvu, afin de conserver la capacité de dissipation de la chaleur du carter (3), d'éléments d'espacement (8) par le biais desquels il est disposé à distance du carter (3) de manière à pouvoir être parcouru par un écoulement à travers et derrière lui.

10. Dispositif de nettoyage selon la revendication 1 ou 2,
**caractérisé en ce que**
les bords (9) du tapis de nettoyage (5'') dépassent au moins partiellement du carter (3) en forme de coin aplati.

11. Dispositif de nettoyage selon la revendication 1 ou 2,
**caractérisé en ce que**
le tapis de nettoyage (5''') est réalisé avec une forme ondulée, les creux de l'ondulation (10) étant connectés fixement au carter (3) et les pics de l'ondulation (11) formant des conduits pour le liquide (12) passant à travers et en dessous du tapis de nettoyage (5''').

12. Dispositif de nettoyage selon l'une quelconque des revendications précédentes,
**caractérisé en ce que**
le tapis de nettoyage (14) est disposé dans la région du carter (3) se raccordant à la surface de fond (4) directement plane dans une région qui est soumise à une sollicitation directe lors du fonctionnement de circulation du liquide.

13. Dispositif de nettoyage selon la revendication 1 ou 2,
**caractérisé en ce que**
le tapis de nettoyage (14, 20, 25) forme, dans l'ensemble du carter de boîte de vitesses, au moins une poche (17, 21, 26), qui présente au moins une ouverture vers l'espace interne du carter (19), de sorte que lors du déplacement du liquide, une partie du liquide parvienne dans cette poche (17, 21,26).

14. Dispositif de nettoyage selon la revendication 1 ou 2,
**caractérisé en ce que**
le tapis de nettoyage (20, 25) présente une couche imperméable aux liquides.

15. Dispositif de nettoyage selon le préambule de la revendication 1,
**caractérisé en ce que**
le tapis de nettoyage (5) présente une constitution essentiellement fibreuse et est fixé sur le carter (3) par collage.

16. Dispositif de nettoyage selon l'une quelconque des revendications précédentes,
**caractérisé en ce que**
le tapis de nettoyage présente des fibres magnétiques.

17. Dispositif de nettoyage selon l'une quelconque des revendications 1 à 15,
**caractérisé en ce que**
le tapis de nettoyage présente des particules magnétiques.

18. Dispositif de nettoyage selon l'une quelconque des revendications 1 à 14,
**caractérisé en ce qu'**
une couche magnétique est prévue sur le côté inférieur du tapis de nettoyage qui est orienté vers le carter (3).

19. Procédé de, fabrication d'un dispositif de nettoyage selon la revendication 15,
**caractérisé en ce que**
l'on applique une couche fibreuse sur une couche d'adhésif dans le carter (3).
